# EUROPÄISCHE PATENTSCHRIFT

(11) **EP 2 780 970 B1**
(45) Veröffentlichungstag und Bekanntmachung des Hinweises auf die Patenterteilung: **23.03.2016**
(21) Anmeldenummer: 12823127.1
(22) Anmeldetag: 08.11.2012
(51) Int. Cl.: H01M 10/14, H01M 10/16, H01M 10/04

(54) **ANLAGE ZUR BEARBEITUNG VON BATTERIEPLATTEN UND ZU DEREN ANORDNUNG IN BEREITGESTELLTE BATTERIEGEHÄUSE**
SYSTEM FOR PROCESSING BATTERY PLATES AND ARRANGEMENT THEREOF IN THE PROVIDED BATTERY HOUSING
INSTALLATION POUR LE TRAITEMENT DE PLAQUES DE BATTERIE ET POUR LEUR MISE EN PLACE DANS DES BACS DE BATTERIE MIS À DISPOSITION

(30) Priorität: 10.11.2011 DE 102011118092
(43) Veröffentlichungstag der Anmeldung: 24.09.2014
(73) Patentinhaber: Sasit Industrietechnik GmbH, 08056 Zwickau (DE)
(72) Erfinder: MEIER, Jochen, 08118 Hartenstein (DE); FRIEDENBERGER, Andrè, 08427 Fraureuth (DE)
(74) Vertreter: Auerbach, Bettina
(86) Internationale Anmeldenummer: PCT/DE2012/001072
(87) Internationale Veröffentlichungsnummer: WO 2013/067993

(56) Entgegenhaltungen:
- EP-A2- 0 397 640
- DE-A1-102010 033 436
- DE-U1-202009 011 262
- US-A- 4 502 213

## Beschreibung

Die Erfindung betrifft eine Anlage zur Bearbeitung von Batterieplatten und Anordnung dieser in die dafür bereitgestellten Batteriegehäuse. Die Anlage besteht aus Transportvorrichtungen und einzelnen Bearbeitungsstationen, wobei die zu bearbeitenden Batterieplatten als Plattenpakete in Spannkassetten für die Bearbeitung angeordnet sind.
Die Erfindung findet Anwendung bei der Herstellung von Kraftfahrzeug- und Nutzfahrzeugbatterien.

Zur Fertigung von Kfz-Batterien ist es notwendig, eine Vielzahl von Elektrodenplatten in einzelne im Batteriegehäuse voneinander getrennt angeordnete Batteriezellen einzuordnen. Dabei sind die Elektrodenplatten zu einzelnen Pakten zusammengefasst und den Batteriezellen zugeordnet.
Eine Vorrichtung zum Verbinden von einzelnen Batterieplatten zu Paketen und zum Einsetzen dieser Pakete in Batteriekästen wird in der AT 008 261 U1 beschrieben. Die einzelnen notwendigen Bearbeitungsschritte werden in insgesamt 14 Bearbeitungsstationen durchgeführt, welche nacheinander angeordnet sind. Dadurch kommt es zu einem immensen Platzbedarf für das Errichten einer solchen Anlage und einen immensen Transportbedarf bei der Fertigung.

Eine weitere Anlage zum Ausrüsten und Bestücken von Batteriekästen mit Plattenpaketen ist in der DE 202009011262 U1 beschrieben. Diese Lösung zeigt auf, dass einzelne Bearbeitungsstationen um einen Hub-Drehtisch als Kompaktstation angeordnet sind und die Spannkassetten, welche mit den zu bearbeiteten Platten ausgestattet sind, werden von dem Hub-Drehtisch zu den einzelnen Transportstationen innerhalb der Kompaktstation zugeführt. Da die Bearbeitungsstationen in dieser Kompaktstation fest integriert angeordnet sind, ist der Zugriff auf diese Stationen während der Fertigung nicht möglich. Dadurch sind separate Wartungsarbeiten erforderlich, falls es zu einem Wartungsbedarf kommt. Außerdem wird die Spannkassette in der Bearbeitungsstation gedreht, was einen separaten zusätzlichen Takt erfordert. Dadurch verlängert sich die Zeit für die Bearbeitung der Platten und die Bestückung der Batteriegehäuse. Auf Grund der Anordnung der Kompaktstation mit Hub-Drehtisch und Bearbeitungsstationen in einer horizontalen Ebene ist der Platzbedarf für die Aufstellung einer solchen Anlage sehr groß.

Aufgabe der Erfindung ist es, eine technische Lösung zu finden, mit der die Mängel des Standes der Technik überwunden werden können.
Die erfinderische Lösung soll sich durch einen geringen Platzbedarf auszeichnen. Mit der Verringerung der Taktzeiten sollen die Herstellungszeiten und Fertigungskosten gesenkt werden. Geeignete Kontroll- und Überwachungssysteme sollen zur optimierten Qualitätssicherung der Fertigung der Batterieplatten und der Anordnung dieser in die Batteriegehäuse beitragen.

Für notwendige Wartungsarbeiten an den Bearbeitungsstationen sollen die Stationen wartungsfreundlich gestaltet sein, so dass auch hierfür keine wesentlichen Stillstandszeiten der Anlage oder zusätzlichen Bearbeitungszeiten in Anspruch genommen werden müssen.

Erfindungsgemäß wird die Aufgabe durch die Merkmale des Anspruchs 1 gelöst. Die Vorteilhaften Ausgestaltungen sind in den Unteransprüchen beschrieben.
Danach besteht die Anlage zur Bearbeitung von Batterieplatten und Anordnung dieser in Batteriegehäusen aus einer Transportvorrichtung und einzelnen Bearbeitungsstationen, wobei die zu bearbeitenden Batterieplatten als Plattenpakete in Spannkassetten für die Bearbeitung angeordnet sind. Die mit den Plattenpaketen ausgestatteten Spannkassetten sind in einer vertikal ausgerichteten und in dieser Position eine kreisförmige Drehbewegung ausführende Transportvorrichtung angeordnet, so dass die Bewegung der Spannkassetten wie bei einem Riesenrad erfolgt.
Dies bietet den Vorteil, dass für die Transportvorrichtung ein sehr geringer Platzbedarf besteht. Des weiteren bietet es den Vorteil, dass die einzelnen Bearbeitungsstationen aus allen räumlichen Ebenen, als oben, unten und seitlich außerhalb der vertikal ausgerichteten Transportvorrichtung angeordnet sind, wobei diese von dort an die positionierte Spannkassette zugeführt und weggeführt werden können.
Dadurch dass die Bearbeitungsstationen aus dem Bearbeitungsbereich weggeführt werden können, wird gleichzeitig eine effiziente Lösung für die Wartung der Bearbeitungsstationen geschaffen. Diese kann bedienfreundlich und zeitsparend gewartet werden.

Als Bearbeitungsstationen sind eine Einlegebox mit mindestens einem Sechsfach-Greifersystem zur Zuordnung der Batterieplattenpakete in die Spannkassette, sowie eine Ausrichtvorrichtung und Spannvorrichtung für die Batterieplattenpakete in die von der Transportvorrichtung bereitgestellte Spannkassette, eine Fluxstation mit Trocknungseinheit und Zinnbad, eine Angussstation zum Angießen der Bleibrücken mit einem Bleibad und einer Einboxstation zum Einboxen der fertig ausgerüsteten Batterieplattenpakete in die bereitgestellten Batteriekästen mit wenigstens einem Sechsfach-Greifersystem vorgesehen.

Die Einlegebox weist vorteilhafter Weise mindestens ein Sechsfach-Greifersystem zum Einlegen der fertig dimensionierten Plattenpakete aus einem Vorratspuffer in die Spannkassette 3 auf, um ein effektives Ausstatten der Spannkassetten mit den Plattenpaketen rationell zu ermöglichen.

Das Zinnbad der Fluxstation ist dabei vorteilhafter Weise mit einem Messsystem zur dauerhaften Messung des Zinnbadspiegels ausgerüstet. Dieses Messsystem gibt die Messwertinformationen an die Zinndrahtdosierung weiter, so dass der Zinnbadspiegel immer auf einem konstanten Niveau gehalten wird. Die Messung kann dabei praktisch als Wirbeistrommessung durchgeführt werden. Diese Maßnahme unterstützt im Wesentlichen den konstanten Erhalt eines notwendigen Zinnbadspiegels, um Fehlerquellen während der Bearbeitung kontinuierlich und effektiv zu vermeiden.

Die Angussstation dient dem Angiessen der Bleibrücken und verfügt deshalb über ein durch eine Trennwand in zwei Becken unterteilten Schmelzkessel, wobei in der einen Kesselhälfte die Bleischmelze und die Zuführung von Bleibarren für die Schmelze erfolgt wobei die andere Kesselhälfte als Beruhigungsbecken dient, von dem die Bleischmelze mittels Pumpe in das Tauchbecken zum Anguss der Bleibrücken überführt wird.
Um einen konstanten Niveauspiegel in dem Beruhigungsbecken des Schmelzkessels zu erhalten, wird mittels einer stetig laufenden Pumpe von dem anderen Becken das geschmolzene Blei in das Beruhigungsbecken gepumpt. Zusätzlich ist in der Trennwand zwischen dem Beruhigungsbecken und dem Becken für die Bleizuführung des Schmelzkessels wenigstens eine Überlaufsicke angeordnet, welche das Höhenniveau der Bleischmelze in dem Beruhigungsbecken des Schmelzkessels zusätzlich reguliert.
Auch diese Maßnahmen dienen stetig und effizient der dauerhaften Sicherung einer Angussqualität beim Bleibrückenanguss während des Fertigungsprozesses.

In der Einboxstation zum Einboxen der fertig ausgerüsteten Batterieplattenpakete in die bereitgestellten Batteriekästen ist wenigstens eine der Säuberung der Einboxrahmen dienende Reinigungsvorrichtung angeordnet. Diese verfügt über ein Bürsten- und/oder Sprühsystem, welches mittels eines Mehrfach-Achssystem in die bereitgestellten Einboxrahmen vor dem Bestücken mit Batterieplattenpaketen hinein fährt und dort die Reinigung und Entfernung von Schmutzpartikel und Anlagerungen durchführt.
Dadurch wird verhindert, dass beim Einboxen Schmutzpartikel an den Plattenpaketen anhaften können, das das Einboxen mit wenig Platzspielraum erfolgt.
Auch diese Maßnahme dient dem Erreichen eines hohen Qualitätsstandart bei der Bestückung von fertig aufbereiteten Batterieplatten in bereitgestellte Batteriegehäuse.

Um die Effektivität der Anlage zu erhöhen, ist an der Einboxstation wenigsten ein Dreifach-Greifersystem angeordnet, welches die fertig vorbereiteten Plattenpakete aus den Spannkassetten entnimmt, und zwar drei Pakete gleichzeitig. Danach werden die Plattenpakete in die Batteriekästen eingeboxt. Bei der Übergabe wird der Batteriekasten gedreht, so dass die nächsten 3 Pakete in den Batteriekasten eingefügt werden können. Vorteilhafter weiser sind mehrere Dreifach-Greifersysteme angeordnet.

Die vertikal ausgerichtete und sich im Kreis drehende Transportvorrichtung verfügt über wenigstens eine separate Drehvorrichtung, welche dem Drehen der Spannkassetten während des Transports zur nächsten Bearbeitungsstation für die Spannkassetten dient. Zeitsparend erfolgt die richtige Positionierung der Spannkassette für den nächsten Bearbeitungsgang während des Transportes zu dieser Station, so dass hierfür kein notwendiger zusätzlicher Zeitaufwand erforderlich ist.
Um die einzelnen Bearbeitungsstationen an die Transportvorrichtung von Außen heran zu führen, verfügt jede Bearbeitungsstation bei Bedarf eine separate, dem Hin- und Herbewegen zur Transportvorrichtung dienende eigene Transportvorrichtung.

Die Vorteile dieser technischen Lösung zur Bearbeitung von Batterieplatten und Anordnung dieser in die dafür bereitgestellten Batteriegehäuse liegen vor allem in der Möglichkeit eines Platz sparenden Aufbaus dieser Anlage mit einem hohen Maß der Kontinuität der einzelnen Bearbeitungsstufenabläufe verbunden mit einer kontinuierlichen Überwachung zur Einhaltung von Qualitätskriterien und zur Vermeidung von Fehlerstellen innerhalb des Fertigungsprozesses.

Durch das herausführen der einzelnen Bearbeitungsstufen aus dem Transportprozess können die Wartungsarbeiten zum Teil ohne Taktzeitverlust durch bereitgestellte Austauschmodule mit Schnellwechseleinrichtungen durchgeführt werden.

Die Erfindung soll nachstehend an einem Ausführungsbeispiel näher erläutert werden.
In der beiliegenden Zeichnung zeigt
- Fig. 1: eine schematische Darstellung einer Anlage zur Bearbeitung vom Batterieplatten und Anordnung dieser in die dafür bereitgestellten Batteriegehäuse;
- Fig. 2: eine schematische Darstellung der Fluxstation mit Zinnbad, Zinndrahtdosierung und Zinnspiegel-Messsystem;
- Fig. 3: eine schematische Darstellung des Bleibades (2.3.1) mit den beiden (2.3.1.5)Becken des Schmelzkessels und Niveauausgleichs-Vorrichtungen;
- Fig. 4: Seitenansicht einer Trennwand (2.3.1.4) mit Überlaufsicke;
- Fig. 5a: eine schematische Seitenansicht der Reinigungsvorrichtung (5) für die Einboxrahmen (2.4.3) mit ihren Spreizbleche (2.4.4);
- Fig. 5b: eine auszugsweise schematische Seitenansicht der Reinigungsvorrichtung (5);
- Fig. 5c: eine schematische Draufsicht auf die Einboxstation 2.4 mit Reinigungssystem 5. für die Einboxrahmen (2.4.3) und Spreizbleche (2.4.4);

### Ausführungsbeispiel:

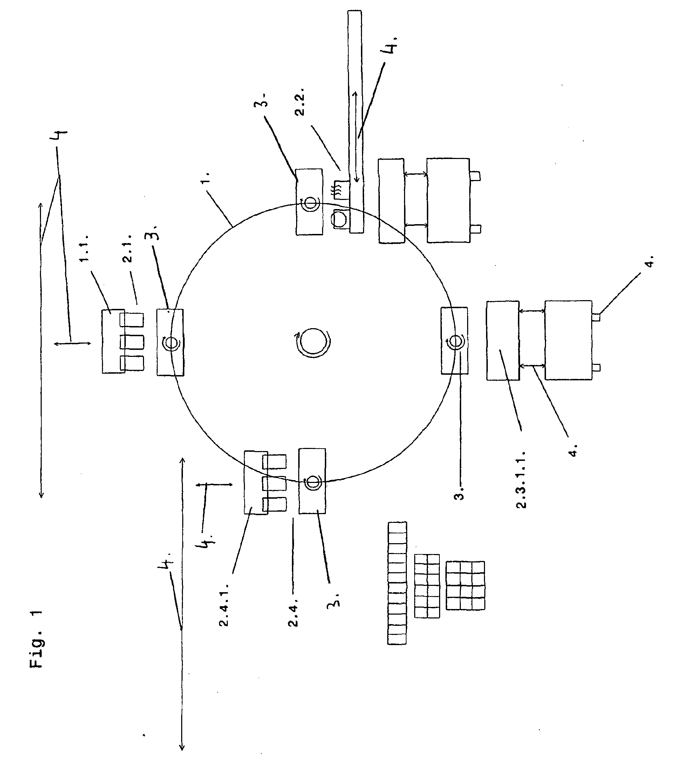

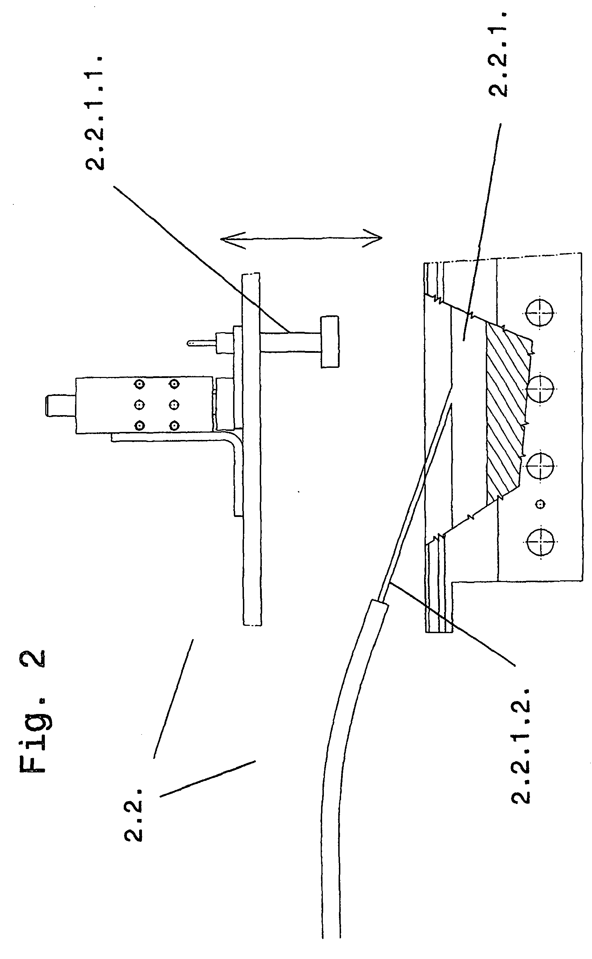

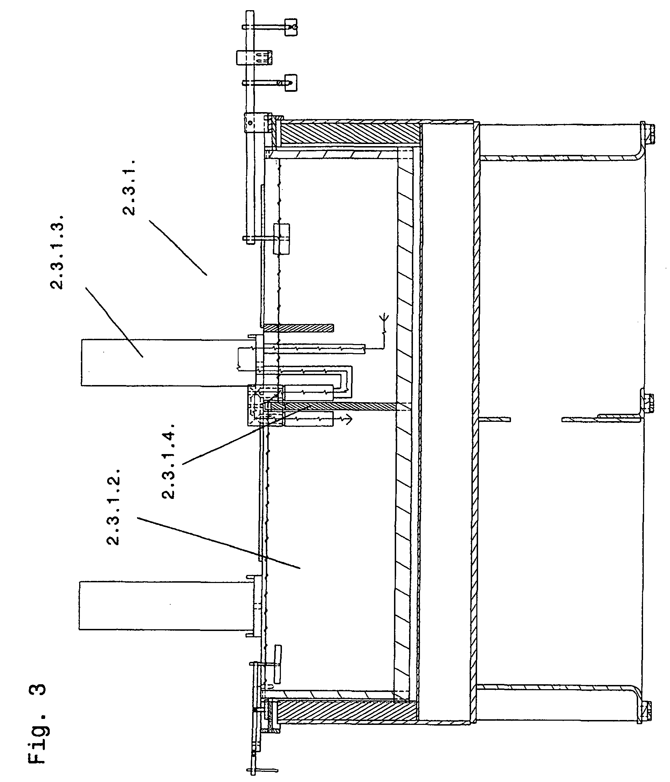

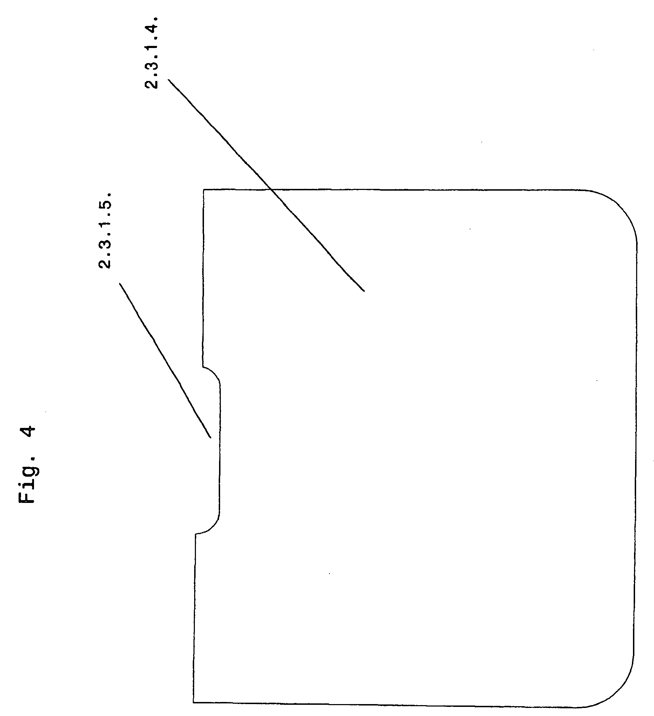

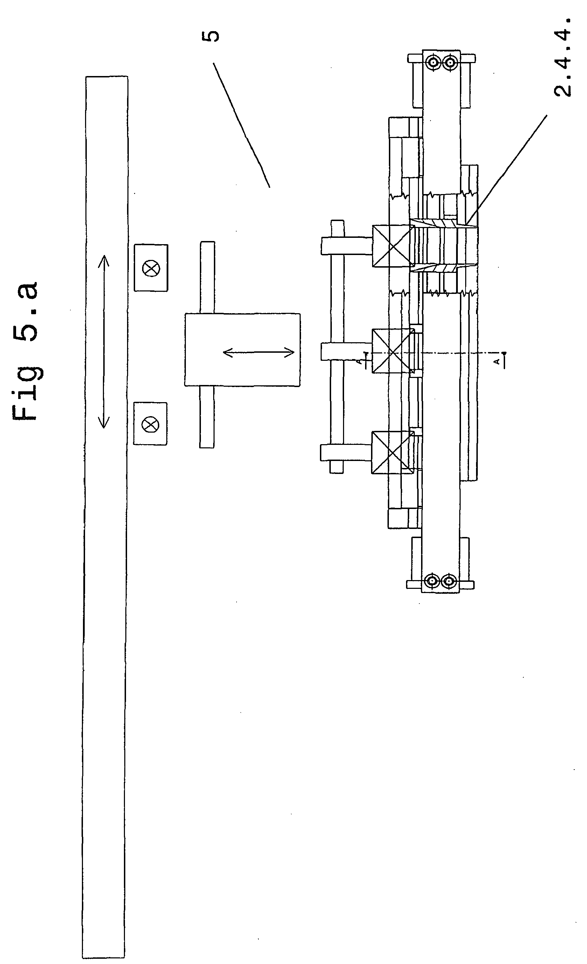

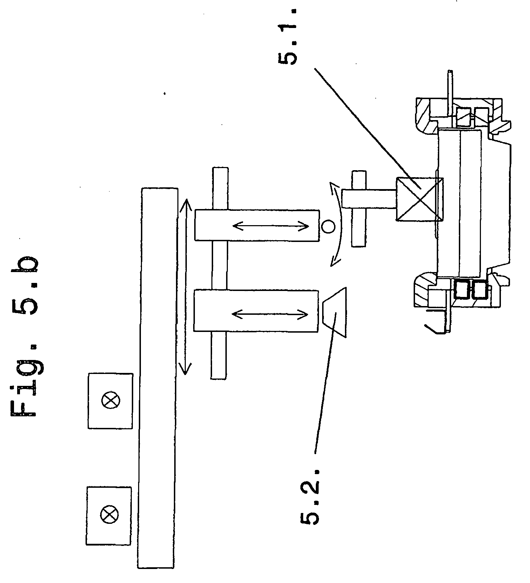

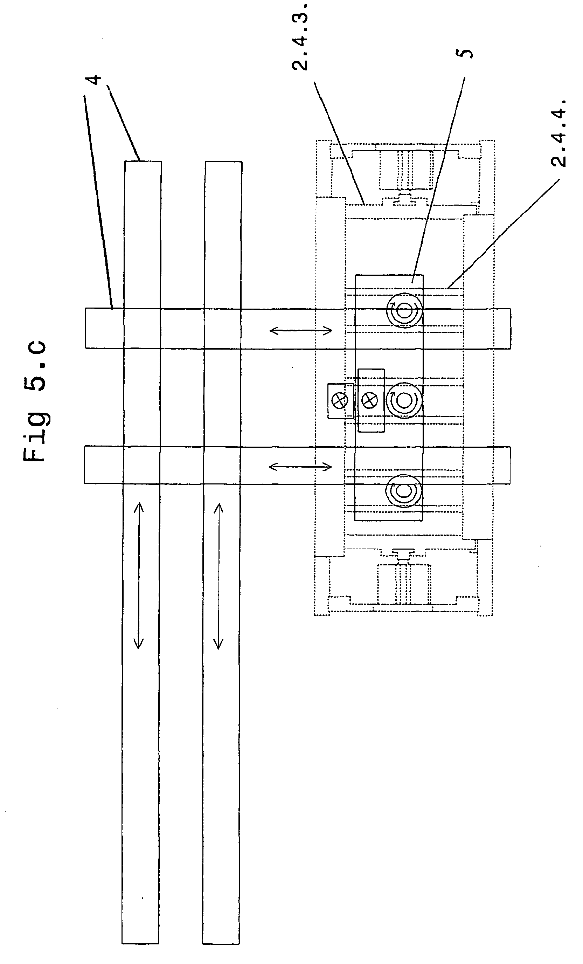

Gemäß der Figuren 1 bis 5c besteht eine Anlage zur Bearbeitung von Batterieplatten und zur Anordnung dieser Batterieplatten in dazu bereitgestellte Batteriegehäuse aus Transportvorrichtungen und einzelnen Bearbeitungsstationen, wie einer Einlegestationen, dem Zinnbad, der Bleiangussstation. Die zu bearbeitenden Batterieplatten werden dabei zur Bearbeitung als definierte Plattenpakete in mehreren dazu bereitgestellten Spannkassetten angeordnet Erfindungsgemäß sind diese mit Plattenpaketen ausgestatteten Spannkassetten in einer eine vertikale Drehbewegung ausführenden Transportvorrichtung 1 angeordnet. Zu dieser Transportvorrichtung 1 sind die einzelnen Bearbeitungsstationen 2.1 - 2.n peripher jedoch außerhalb des Bewegungskreises der Transportvorrichtung 1 angeordnet. Von dort sind die Bearbeitungsstationen 2.1 - 2.n jeweils an die Position der durch die Transportvorrichtung 1 positionierten Spannkassette 3 mittels separater Transporteinrichtungen 4 heranführbar angeordnet.
So umfasst die erste Bearbeitungsstation, die Einlegebox 2.1 mindestens ein Sechsfach-Greifersystem zum Zuordnen der Plattenpakete aus einem Vorratspuffer in die Spannkassette 3, einer Ausrichtvorrichtung zum Ausrichten und zum Anbiegen der Plattenfahnen und einer Spannvorrichtung zum Spannen der Plattenpakete für das Einbringen in die von der Transportvorrichtung 1 bereitgestellten Spannkassetten 3.

Durch vertikales Drehen der Transportvorrichtung 1 gelang die mit Plattenpaketen ausgestattete Spannkassette 3 zur Position der zweiten Bearbeitungsstation, der Fluxstation 2.2. Mittels eines horizontalen Schlitten als eine separate Transportvorrichtung 4 der Fluxstation 2.2 gelangt diese mit dem angeordneten Zinnbad 2.2.1 und dem integrierten Messsystem 2.2.1.1, welches als Wirbelstrommessverfahren arbeitet, zur kontinuierlichen Messung des Zinnbadspiegels und der Zinndrahtdosierung 2.2.1.2 an die Spannkassette 3. Zur optimalen Zinnbadspiegelregulieren sind das Messsystem 2.2.1.1 und die Zinndrahtdosierungen 2.2.1.2 informationstechnisch miteinander gekoppelt. Sowohl das Zinnbad 2.2.1 als auch die zusätzlich angeordnete Trocknungsvorrichtung sind dabei vertikal an die Transportvorrichtung 1 mittels der separaten Transportvorrichtung 4 heranfahrbar. Zusätzlich ist das Zinnbad 2.2.1 in vertikaler Richtung an der Spannkassette 3 heranführbar. Diese wird vor dem eintauchen mit den Fahren nach unten gedreht und kann so an das von unter herangeführte Zinnbad 2.2.1 eintauchen. Nach dem Trocknen wird die Spannkassette von der Transportvorrichtung zur Bearbeitungsstation 3 infolge der vertikalen Drehbewegung transportiert.
In der Angussstation 2.3 erfolgt der Bleibrückenanguss. Dazu weist die Gussstation 2.3 ein Bleibad 2.3.1 mit einem Schmelzkessel 2.3.1.2 auf.
Der Schmelzkessel 2.3.1.2 ist wiederum durch eine Trennwand 2.3.1.4 in zwei Teilbecken unterteilt. In der einen Kesselhälfte erfolgt die Zuführung von Bleibarren für die Bleischmelze. In der anderen Kesselhälfte erfolgt die Beruhigung des geschmolzenen Bleis. Das Blei wird mittels einer Pumpe 2.3.1.3 stetig von der einen Kesselhälfte in das Beruhigungsbecken des Schmelzkessels 2.3.1.2 gepumpt. In der Trennwand 2.3.1.4 zwischen dem Beruhigungsbecken und dem Becken für die Bleizuführung des Schmelzkessels 2.3.1.1 ist wenigstens eine Überlaufsicke 2.3.1.5 angeordnet, welche das Höhenniveau der Bleischmelze in dem Beruhigungsbecken des Schmelzkessels zusätzlich durch dauerhaften Überlauf reguliert, da die Bleispiegeloberflächen der beiden Becken des Schmelzkessels 2.3.1.2 über unterschiedliche Höhenniveaus verfügen.
Von dem Beruhigungsbecken des Schmelzkessels 2.3.1.2 gelangt das geschmolzene und eine sehr gute Qualität aufweisende Blei mittels einer weiteren Pumpe in eine Angussform 2.3.1.1 wo der Bleibrückenanguss erfolgt. Dazu weist die Gussstation 2.3 eine zusätzliche vertikale Transportvorrichtung 4 zum Heranführen der Angussform 2.3.1.1 an die Spannkassette 3 auf. Über eine zusätzliche horizontale Verschiebevorrichtung als Transportvorrichtung 4 besteht die Möglichkeit, die gesamte Angussform 2.3.1.1 für Wartungs- und/oder Reparaturarbeiten auszutauschen, so dass der Bearbeitungstaktverlauf der Transportvorrichtung nicht unterbrochen werden muss.
Nach dem Bleibrückenanguss wird die Spannkassette 3 mittels der Transportvorrichtung 1 durch ihr vertikales Drehen an die Position der Einboxstation 2.4 zum Einboxen der fertig ausgerüsteten Batterieplattenpakete in die bereitgestellten Batteriekästen transportiert.
Dazu weist die Einboxstation 2.4 wenigsten ein Dreifach-Greifersystem 2.4.1 und einer der Säuberung der Einboxrahmen 5.1. dienende Reinigungsvorrichtung 5 auf. Diese dient der Reinigung der Spreizbleche 2.4.4, der Einboxrahmen 2.4.3, welche durch ihren ständigen Einsatz Verunreinigungen aufweisen. Die Reinigungsstation 5 weist ein Bürsten- 5.1. und/oder Sprühsystem 5.2. auf, welches mittels eines Mehrfach-Achssystem in die bereitgestellten Einboxrahmen vor dem Bestücken mit Batterieplattenpaketen hinein fährt und dort die Reinigung und Entfernung von Schmutzpartikel und Anlagerungen in 3D- Richtungen vornimmt und sicher durchführt.

Die Vorteile der vorliegenden Erfindung bestehen zusammengefasst in einer technischen Lösung zur Bearbeitung und Anordnung von Batterieplatten in bereitgestellte Batteriegehäuse, welche sich durch einen geringen Platzbedarf auszeichnet, ein hohes Maß an Überwachungsfunktionen und Qualitätssicherungsmaßnahmen für die Bearbeitungsabläufe in den einzelnen Bearbeitungsstationen aufweist, effizient arbeitet und in Folge der Zuordnung von zusätzlichen Transportvorrichtungen zu den einzelnen Bearbeitungsstationen den Zeitaufwand für Reparatur- und Wartungsaufgaben immens reduziert. Vor allem die Maßnahmen zur Verbesserung der Qualitätssicherung tragen dazu bei, dass alle Bearbeitungsschritte zur Fertigung und Bestückung der Batterie-Plattenpakete dauerhaft und sicher kontrolliert und reguliert werden, so dass die Anlage ein hohes Maß an qualitativ hochwertigen und fertig bestückten Batteriekästen liefert.

### Bezugszeichenliste

- 1: Transportvorrichtung für Spannkassetten
- 2.1 -2.n: Bearbeitungsstationen
- 2.1: Einlegebox
- 2.1.1: Sechsfach-Greifersystem
- 2.2: Fluxstation
- 2.2.1: Zinnbad
- 2.2.1.1: Messsystem für Zinnspiegelniveau
- 2.2.1.2: Zinndrahtdosierung
- 2.3: Gussstation
- 2.3.1.: Bleibad
- 2.3.1.1: Angussform
- 2.3.1.2: Schmelzkessel
- 2.3.1.3: Pumpe
- 2.3.1.4: Trennwand
- 2.3.1.5: Überlaufsicke
- 2.4: Einboxstation
- 2.4.1: Dreifach-Greifer
- 2.4.3: Einboxrahmen
- 2.4.4: Spreizbleche
- 3: Spannkassetten
- 4: separate Transportvorrichtungen der Bearbeitungsstationen
- 5: Reinigungsvorrichtung
- 5.1: Bürstensystem
- 5.2: Sprühsystem

## Patentansprüche

1. Anlage zur Bearbeitung von Batterieplatten und Anordnung dieser in Batteriegehäusen, bestehend aus Transportvorrichtungen und einzelnen Bearbeitungsstationen, wie Einlegestationen, Zinnbad, Bleiangußstation, wobei die zu bearbeitenden Batterieplatten als Plattenpakete in mehreren dazu bereitgestellten Spannkassetten für die Bearbeitung angeordnet sind, **dadurch gekennzeichnet,**
**dass** die mit den Plattenpaketen ausgestatteten Spannkassetten in einer *vertikal ausgerichteten und sich in dieser Position im Kreis drehenden und eine vertikale Kreisbewegung* der Spannkassetten *vollziehende* Transportvorrichtung (1) *der Anlage* angeordnet sind,
**dass** die einzelnen Bearbeitungsstationen (2.1 - 2.n) oben, unten und/oder seitlich außerhalb der sich in einer vertikal ausgerichteten Kreisbewegung drehenden Transportvorrichtung und von dort an die jeweils an der Position der Bearbeitungsstation (2.1 - 2.n) positionierte Spannkassette zuführbar angeordnet sind.

2. Anlage zur Bearbeitung von Batterieplatten und Anordnung dieser in Batteriegehäusen nach dem Anspruch 1, **dadurch gekennzeichnet,**
**dass** als Bearbeitungsstationen (2.1-2.n)
- eine Einlegebox (2.1) mit mindestens einem Sechsfach-Greifersystem, einer Ausrichtvorrichtung und Spannvorrichtung für die Batterieplattenpakete in die von der Transportvorrichtung (1) bereitgestellte Spannkassette (3),
- eine Fluxstation (2.2) mit Trocknungsvorrichtung und Zinnbad und das Zinnbad (2.2.1) der Fluxstation (2.2) ein der Zinnspiegelmessung dienendes Messsystem (2.2.1.1) und einem damit informationstechnisch gekoppelten Zinndrahtdosierung (2.2.1.2) ausgerüstet ist,
- eine Gussstation (2.3) zum Angießen der Bleibrücken mit einem Bleibad (2.3.1) in dem zwischen Tauchbecken (2.3.1.1) und Schmelzkessel (2.3.1.2) eine dem dauerhaften Niveauausgleich der Bleischmelze dienende Pumpe (2.3.1.3.) angeordnet ist und in der Trennwand (2.3.1.4) zwischen Tauchbecken (2.3.1.1) und Schmelzkessel (2.3.1.2) wenigstens eine das Bleischmelzeniveau regulierende Überlaufsicke (2.3.1.5) angeordnet ist und
- eine Einboxstation (2.4) zum Einboxen der fertig ausgerüsteten Batterieplattenpakete in die bereitgestellten Batteriekästen mit wenigstens einem Dreifach-Greifersystem und einer der Säuberung der Einboxrahmen (2.4.3) mit seinen Spreizplatten (2.4.4) dienenden Reinigungsvorrichtung (5), um die vertikal ausgerichtete Transportvorrichtung (1) und zu dieser mittels separat an den Bearbeitungsstationen (2.1 - 2n) angeordneten zusätzlichen Transportvorrichtungen (4) beweglich angeordnet sind.

3. Anlage zur Bearbeitung von Batterieplatten und Anordnung dieser in Batteriegehäusen nach einem der Ansprüche 1 und 2, **dadurch gekennzeichnet, dass** an der vertikal ausgerichteten und sich im Kreis drehenden Transportvorrichtung wenigstens eine dem Drehen der Spannkassetten während des Transports zur nächsten Bearbeitungsstation (2.1 - 2n) separate Drehvorrichtung für die Spannkassetten angeordnet ist.

4. Anlage zur Bearbeitung von Batterieplatten und Anordnung dieser in Batteriegehäusen nach einem der Ansprüche 2 bis 3, **dadurch gekennzeichnet, dass** das im Zinnbad (2.2.1) angeordnete und der Zinnspiegelmessung dienende Messsystem (2.2.1.1) als Wirbelstrommesssystem ausgebildet ist.

5. Anlage zur Bearbeitung von Batterieplatten und Anordnung dieser in Batteriegehäusen nach einem der Ansprüche 1 bis 4, **dadurch gekennzeichnet, dass** jede Bearbeitungsstation (2.1 - 2.n) bei Bedarf eine separate, dem Hin- und Herbewegen zur Transportvorrichtung dienende eigene Transportvorrichtung (4) aufweist.

6. Anlage zur Bearbeitung von Batterieplatten und Anordnung dieser in Batteriegehäusen nach einem der Ansprüche 2 bis 5, **dadurch gekennzeichnet, dass** die Reinigungsvorrichtung (5) ein Bürsten- und/oder Sprühkopfsystem (5.1, 5.2) ausgebildet ist, wobei dieses System an über Bewegungsvorrichtung mit mehreren Dreh- und Bewegungsachsen angeordnet ist.

## Claims

1. System for processing battery plates and arrangement of them in battery housings, consisting of transporting devices and individual processing stations, such as insertion stations, a tin bath, a lead casting station, the battery plates to be processed being arranged for the processing as plate stacks in a number of clamping cassettes provided for this purpose, **characterized**
**in that** the clamping cassettes provided with the plate stacks are arranged in a transporting device (1) of the system that is vertically aligned and in this position turns in a circular manner and carries out a vertical circular movement of the clamping cassettes,
**in that** the individual processing stations (2.1 - 2.n) are arranged above, below and/or laterally outside the transporting device that turns in a vertically aligned circular movement and, from there, can be respectively brought up to the position of the clamping cassette positioned processing station (2.1 - 2.n).

2. System for processing battery plates and arrangement of them in battery housings according to Claim 1, **characterized in that**
- an insertion box (2.1), with at least a sixfold gripper system, an aligning device and clamping device for the battery plate stacks into the clamping cassette (3) provided by the transporting device (1),
- a flux station (2.2), with a drying device and tin bath and the tin bath (2.2.1) of the flux station (2.2) is fitted out a measuring system (2.2.1.1), which serves for measuring the tin level, and a tin wire feed (2.2.1.2), which is coupled thereto in terms of information technology,
- a casting station (2.3) for casting on the lead bridges, with a lead bath (2.3.1), in which a pump (2.3.1.3) which serves for permanently equalizing the level of the molten lead is arranged between the immersion compartment (2.3.1.1) and the melting vessel (2.3.1.2), and at least one overflow bead (2.3.1.5) which regulates the level of the molten lead is arranged in the separating wall (2.3.1.4) between the immersion compartment (2.3.1.1) and the melting vessel (2.3.1.2), and
- a boxing station (2.4) for boxing the completely fitted-out battery plate stacks into the battery cases provided, with at least a threefold gripper system and a cleaning device (5) which serves for the cleaning of the boxing frames (2.4.3) with its spreaders (2.4.4),
are arranged as processing stations (2.1 - 2.n) around the vertically aligned transporting device (1) and movably in relation thereto by means of additional transporting devices (4) arranged separately at the processing stations (2.1 - 2.n).

3. System for processing battery plates and arrangement of them in battery housings according to either of Claims 1 and 2, **characterized in that** at least one separate turning device for the clamping cassettes, which for turning the clamping cassettes during the transport to the next processing station (2.1 - 2.n), is arranged on the vertically aligned and circularly turning transporting device.

4. System for processing battery plates and arrangement of them in battery housings according to either one of Claims 2 and 3, **characterized in that** the measuring system (2.2.1.1), which is arranged in the tin bath (2.2.1) and serves for measuring the tin level, is formed as an eddy current measuring system.

5. System for processing battery plates and arrangement of them in battery housings according to one of Claims 1 to 4, **characterized in that** each processing station (2.1 - 2.n) has if need be a separate transporting device (4) of its own, serving for moving back and forth in relation to the transporting device.

6. System for processing battery plates and arrangement of them in battery housings according to one of Claims 2 to 5, **characterized in that** the cleaning device (5) is formed a brush and/or spray head system (5.1, 5.2), this system being arranged on over movement device with a number of turning and movement axes.

## Revendications

1. Installation pour le traitement de plaques de batteries et leur disposition dans des boîtiers de batteries, constituée de dispositifs de transport et de postes de traitement individuels tels que des postes d'introduction, un bain d'étain, un poste d'injection de plomb, les plaques de batteries à traiter étant disposées sous forme de paquets de plaques dans plusieurs cassettes de serrage préparées en vue de leur traitement,
**caractérisée en ce que**
les cassettes de serrage équipées des paquets de plaques sont disposées dans un dispositif de transport (1) de l'installation orienté verticalement et tournant en cercle dans cette position et effectuant un mouvement circulaire vertical des cassettes de serrage,
les postes de traitement individuels (2.1-2n) sont disposés en haut, en bas et/ou latéralement à l'extérieur du dispositif de transport tournant suivant un mouvement circulaire orienté verticalement, et de là, ils peuvent être acheminés à chaque fois à la position du poste de traitement (2.1-2.n) la cassette de serrage positionée.

2. Installation pour le traitement de plaques de batteries et leur disposition dans des boîtiers de batteries selon la revendication 1, **caractérisée en ce que**, en tant que postes de traitement (2.1-2.n),
- une boîte d'introduction (2.1) comprenant au moins un système de préhension à six positions, un dispositif d'alignement et un dispositif de serrage pour les paquets de plaques de batteries dans la cassette de serrage (3) fournie par le dispositif de transport (1),
- un poste de flux (2.2) avec un dispositif de séchage et un bain d'étain et le bain d'étain (2..2.1) du poste de flux (2.2) est muni un système de mesure (2.2.1.1) servant à la mesure du niveau d'étain et à un dosage de fil d'étain (2.2.1.2) accouplé à celui-ci par une technique d'information,
- un poste de coulée (2.3) pour l'injection des ponts de plomb, comprenant un bain de plomb (2.3.1) dans lequel est disposée, entre des bassins d'immersion (2.3.1.1) et une cuve de fusion (2.3.1.2), une pompe (2.3.1.3) servant à l'équilibrage durable du niveau du plomb en fusion et au moins une moulure de débordement (2.3.1.5) régulant le niveau du plomb en fusion étant disposée dans la paroi de séparation (2.3.1.4) entre le bassin d'immersion (2.3.1.1) et la cuve de fusion (2.3.1.2), et
- un poste d'emballage (2.4) pour emballer les paquets de plaques de batteries finis et équipés dans les compartiments de batteries préparés avec au moins un système de préhension à trois positions et un dispositif de nettoyage (5) servant à nettoyer le cadre d'emballage (2.4.3) avec ses plaques d'écartement (2.4.4),
sont disposés de manière déplaçable autour du dispositif de transport (1) orienté verticalement et vers celui-ci au moyen de dispositifs de transport (4) supplémentaires disposés séparément sur les postes de traitement (2.1-2.n).

3. Installation pour le traitement de plaques de batteries et leur disposition dans des boîtiers de batteries selon l'une quelconque des revendications 1 et 2, **caractérisée en ce qu'**au moins un dispositif de rotation séparé pour les cassettes de serrage, qui pour la rotation des cassettes de serrage pendant le transport jusqu'au poste de traitement suivant (2.1-2n), est disposé au niveau du dispositif de transport orienté verticalement et tournant en cercle.

4. Installation pour le traitement de plaques de batteries et leur disposition dans des boîtiers de batteries selon l'une quelconque des revendications 2 à 3, **caractérisée en ce que** le système de mesure (2.2.1.1) disposé dans le bain d'étain (2.2.1) et servant à la mesure du niveau d'étain est réalisé sous forme de système de mesure à courants de Foucault.

5. Installation pour le traitement de plaques de batteries et leur disposition dans des boîtiers de batteries selon l'une quelconque des revendications 1 à 4, **caractérisée en ce que** chaque poste de traitement (2.1-2.n) présente au besoin son propre dispositif de transport séparé (4) servant au déplacement d'avant en arrière par rapport à la direction de transport.

6. Installation pour le traitement de plaques de batteries et leur disposition dans des boîtiers de batteries selon l'une quelconque des revendications 2 à 5, **caractérisée en ce que** le dispositif de nettoyage (5) est réalisé un système de brosse et/ou de tête de pulvérisation (5.1, 5.2), ce système étant disposé sur par le biais d'un dispositif de déplacement comprenant plusieurs axes de rotation et de déplacement.
